# EUROPEAN PATENT SPECIFICATION

(11) **EP 4 252 961 B1**
(45) Date of publication and mention of the grant of the patent: **01.05.2024**
(21) Application number: 21811108.6
(22) Date of filing: 08.11.2021
(51) Int. Cl.: B23P 21/00, G05D 1/00, F16P 3/14, G05B 19/418, G05B 9/02, F16P 3/08

(54) **SYSTEM AND METHOD FOR CONTROLLING ACCESS TO PRODUCTION LINE NESTS**
SYSTEM UND VERFAHREN ZUR STEUERUNG DES ZUGRIFFS AUF PRODUKTIONSLINIENNESTS
SYSTÈME ET PROCÉDÉ DE CONTRÔLE D'ACCÈS À DES POSTES D'ASSEMBLAGE DE LIGNES DE PRODUCTION

(30) Priority: 24.11.2020 ES 202031178
(43) Date of publication of application: 04.10.2023
(73) Proprietor: Ingemat, S.L., 48170 Zamudio, Vizcaya (ES)
(72) Inventor: TARRIO BARTOLOMÉ, Adolfo, 48170 Zamudio (Vizcaya) (ES)
(74) Representative: Ungria López, Javier
(86) International application number: PCT/ES2021/070801
(87) International publication number: WO 2022/112628

(56) References cited:
- EP-A1- 2 048 560
- EP-A1- 3 268 827
- US-A- 4 950 118
- HERRERO-PEREZ D ET AL: "Modeling Distributed Transportation Systems Composed of Flexible Automated Guided Vehicles in Flexible Manufacturing Systems", IEEE TRANSACTIONS ON INDUSTRIAL INFORMATICS, IEEE SERVICE CENTER, NEW YORK, NY, US, vol. 6, no. 2, 1 May 2010 (2010-05-01), pages 166-180, XP011299772, ISSN: 1551-3203

## Description

### TECHNICAL FIELD

The present invention is useful in the sector of automated or semi-automated industrial production lines. For example, and without limitation, it is useful on vehicle production or assembly lines.

More specifically, the present invention relates to a system and method for controlling access to nests, of those used on production lines, which enables safely controlling access to the inside of said nests, preventing accidents from happening due to the simultaneous entrance inside the nest by an operator, or a vehicle, which is in charge of supplying parts, and a robot in charge of assembling said parts.

### BACKGROUND OF THE INVENTION

Nowadays, on automated production lines, to mass produce a predetermined product the original product is placed on the production line and moves along said line by means of suitable mechanical systems, such that it passes through successive work stations in which new parts are assembled to the original product until the finished product reaches the end of the production line.

In these types of production lines, assembly robots are commonly used, which are in charge of taking the parts from a storage area and subsequently assembling them to the product on the production line.

The areas where the robots get the parts to be assembled are known as nests.

In most cases these nests are usually arranged in two facing access areas: a first area (which will henceforth be referred to as "collection area") through which the assembly robot will access the inside of the nest to collect the part or parts to be assembled, and a second area (which will henceforth be referred to as "access area"), opposite the first area, through which access will be available to the inside of the nest to stock it with new parts.

Nowadays, it is common for these nests to be manually stocked by operators who periodically enter the access area and place new parts in the nests.

Furthermore, there are often hardly any safety measures, sometimes none at all, to control access to the nests, which can lead to accidents in which an operator enters the inside of the nest at the same time as a robot.

On the other hand, there has been a recent trend to increase the automation of these production lines, in which the use of automated guided vehicles (AGVs) to stock the nests is common.

AGVs are able to move in an autonomous manner due to the automatic guide means. Furthermore, AGVs also have safety systems configured to control the speed of the vehicle and even stop it, based on the obstacles detected on its path. Said guide means are often programmable and can store a predetermined route for the vehicle to follow. Likewise, said automatic guide means actuate the motor and the direction of the vehicle to steer it along said route. In order for the automatic guide means to physically identify the best route to take in the factory, said routes are commonly provided with one or several route guidance methods. The route guidance can vary based on the type of AGV.

Thus, for example, in the case of optically guided AGVs, the route guidance is based on strips of catadioptric mirrors placed along the route to be followed which can be detected by the automatic guide means, by means of photocells. On the other hand, in laser guided AGVs, the route guidance consists of a set of reflectors that are identified by the automatic guide means, by means of a rotary laser unit that sweeps the area, identifying the objects in its surroundings.

Without being exhaustive, there are other types of AGVs, such as wire guided AGVs, in which the route guidance consists of a wire installed below the ground of the factory, as well as AGVs that use computer vision.

To be able to extend the use of said AGVs and fully integrate them into applications in which they access nests on production lines, it would be necessary to first develop safety protocols and systems that control access of said vehicles to the inside of the nests at all times.

Document EP3268827A1 discloses for example a system for controlling access to a nest in a production line for an AGV.

### DESCRIPTION OF THE INVENTION

With the aim of solving the aforementioned drawbacks and problems in relation to the prior art, a first object of the present invention relates to a system for controlling access to at least one nest of a production line, said nest comprising an inside space delimited by a barrier, a parts collection area and a vehicle access area, the production line comprising safety means configured to send signals of an incident when an incident is detected on the production line, the access control system being characterised in that it comprises:
- access request means, configured to send an access request signal when an automated guided vehicle intending to stock the nest with assembly parts reaches a predetermined distance to the vehicle access area, said automated guided vehicle being provided with an autonomous safety system configured to prevent the vehicle from moving when it detects the proximity of an obstacle;
- occupation detection means configured, in response to the access request signal, to detect whether the space inside the nest is occupied, and to emit an inoccupation signal in the case that the space inside the nest is not occupied, and to emit an occupation signal in the case that the space inside the nest is occupied;
- connection means configured so that once a signal is received from the occupation detection means, they connect the automated guided vehicle to the safety means of the production line and are configured to stop the automated guided vehicle if it receives a signal of an incident from the safety means of the production line or an occupation signal from the occupation detection means;
- means for opening and closing the parts collection area, connected to the connection means and configured to close the parts collection area before the vehicle enters the space inside the nest and to open the parts collection area when the vehicle has completed its access into the space inside the nest.

The access control system according to the present invention allows automated guided vehicles to safely access the nest given that when said vehicle reaches a predetermined distance, close enough to the access area for the entry of vehicles, a request for access to the nest is automatically sent. In response to said access request signal, the occupation detection means are checked to see if the space inside the nest is occupied. If the nest is occupied, the connection means are not activated and the AGV does not enter. If the nest is unoccupied, the connection means are activated and connect the vehicle to the safety means of the production line to check if the line is enabled or if an incident has occurred.

At this moment, the movement of the vehicle will be conditioned by the incidents that are transmitted through the connection means (which can be, for example, category 4 optical means), preventing the movement of the vehicle if there is an incident.

Furthermore, before allowing the vehicle access to the nest, the parts collection area will be closed, thereby preventing robots from accessing the space inside the nest and avoiding possible accidents inside the nest. The invention will also check at all times that a person can access the area of the nest where the AGV is operating.

Once the vehicle has completed its task in the nest, having delivered the corresponding parts, the vehicle will begin to exit the nest. When the vehicle exits the nest, the moment it exceeds the predetermined distance the connection means will be deactivated, ceasing to complement the safety of the vehicle, said safety thus being controlled again by the autonomous system of the vehicle. Then, as the vehicle continues to advance, the access request means will be deactivated.

In one embodiment of the invention, the system further comprises at least one safety mechanism by way of a "folding door" arranged in the vehicle access area, provided with at least one folding door and a safety sensor. In the preset position of the mechanism, it acts as a barrier or a door that prevents access to the space inside the nest from the sides.

In the case that someone tried to enter, they would have to open or further fold the door, which would activate the safety sensor. This activation activates a safety alarm so that if there is an access request it will be denied, said access request not being granted until the alarm is reset (after checking there is nobody inside).

The door is made of methacrylate so that it is transparent in any position and there is visibility at all times to see inside the nest.

The access request means can be implemented in different ways, depending on the needs of each particular case.

Thus, in one embodiment of the invention, which is preferred, arranged in the vehicle access area are two metal profiles, such that the ends of the metal profiles furthest from the nest are at the same predetermined distance from the vehicle access area, which the AGV must approach to request access. In this embodiment of the invention, the AGV comprises a pair of inductive sensors. This way, when the inductive sensors of the AGV detect one of the metal profiles, the AGV is at the predetermined distance to the nest. The inductive sensors then inform the access request means and said access request means send the corresponding access request.

In one embodiment of the invention, which is preferred, the access request means comprise at least one emitting/receiving photocell (meaning a cell that integrates both an emitting and receiving photocell) arranged in the vehicle access area and at least an optical reflection device, for example a mirror, arranged in the automated guided vehicle (AGV). This way, when the vehicle reaches the predetermined distance to the vehicle access area, the beam emitted by the emitting/receiving photocell reaches the optical reflection means and is reflected, returning to the emitting/receiving photocell. The beam reflected by the optical reflection device is, in this specific case, the access request signal, such that by receiving it the occupation detection means are verified and the system according to the invention manages said access request.

In another embodiment of the invention, the access request means comprise an emitting photocell and a receiving photocell. Preferably, the emitting photocell is a category 4 single beam. This type of transmission is especially safe, since category 4 is a safety standard that certifies a maximum level of safety in the emission and transmission of the signal.

The receiving photocell, preferably category 4, is arranged in the automated guided vehicle and the category 4 emitting photocell is arranged in the vehicle access area to the nest.

In the embodiment of the invention described in the previous paragraph, when the vehicle reaches the predetermined distance, the beam emitted by the emitting/receiving photocell is reflected off the mirror of the AGV, this reflected signal being the access request signal, and when it is received, the occupation detection means are verified and the system according to the invention manages said access request.

In another embodiment of the invention, there is a portion of ferrous material and emitting/receiving means provided with at least one inductive sensor connected to a programmable logic controller of the AGV. When the vehicle reaches the predetermined distance to the vehicle access area, the inductive sensor detects the portion of ferrous material, sending a signal to the AGV as well as the access request, verifying the occupation detection means, and the system according to the invention manages said access request.

In another embodiment of the invention, the access request means comprise emitting/receiving means provided with two photocells, the beams of which are cross at a point situated at the predetermined distance to the vehicle access area, preferably as described in detail in standard IEC62046. When the vehicle reaches said point, the beams detect the vehicle. This detection of the vehicle is, in this specific case, the access request signal, such that by receiving it the occupation detection means are verified and the system according to the invention manages said access request.

The occupation detection means can be provided with a safety laser scanner housed inside the nest. They can also be provided with a photoelectric barrier arranged in the vehicle access area. More preferably, the occupation detection means are provided both with a safety laser scanner housed in the nest and a photoelectric barrier arranged in the vehicle access area.

The connection means, which transmit the emergency signals of the production line to the vehicle (AGV) preferably comprise a category 4 single beam emitter situated in the vehicle access area and a category 4 single beam receiver situated in the vehicle.

Likewise, the safety means on the line can be provided with a programmable logic controller (PLC). Said PLC would be the element in charge of emitting the signals of an incident when an anomaly is detected on the production line that could compromise safety during access to the nest.

A second aspect of the invention relates to a method for controlling access to at least one nest of a production line, said nest comprising an inside space delimited by a barrier, a parts collection area and a vehicle access area, the production line comprising safety means configured to send signals of an incident when an incident is detected on the production line, the access control method being characterised in that it comprises the following steps:
- sending an access request signal to the nest with the access request means when the vehicle reaches a predetermined distance to the vehicle access area;
- verifying the occupation detection means, in response to the access request signal to the nest and emitting with said occupation detection means an inoccupation signal in the case that the space inside the nest is not occupied and emitting an occupation signal in the case that the space inside the nest is occupied;
- after receiving an inoccupation signal emitted by the occupation detection means, connecting by means of the connection means the automated guided vehicle to the safety means of the production line, the connection means temporarily complementing the autonomous vehicle safety system, transmitting to it any incident that occurs on the production line;
- stopping, by means of the connection means, the automated guided vehicle in the case of receiving a signal of an incident from the safety means on the production line and, in the opposite case, allowing the automated guided vehicle access to the space inside the nest; and
- closing the parts collection area with the opening and closing means before the connection means allow the vehicle to access the space inside the nest and opening the parts collection area when the vehicle has completed its access to the space inside the nest.

### BRIEF DESCRIPTION OF DRAWINGS

To complete the present description of the invention, and for the purpose of helping to make the technical features of the invention more readily understandable, in accordance with preferred practical exemplary embodiments thereof, said description is accompanied by a set of drawings constituting an integral part of the same, which by way of illustration and not limitation represent the following:
Figure 1 is a partially plan schematic view which shows a first embodiment of the system of the present invention;
Figure 2 is a partially plan schematic view which shows a second embodiment of the system of the present invention;
Figure 3 is a partially plan schematic view which shows a third embodiment of the system of the present invention;
Figure 4 is a partially plan schematic view which shows a fourth embodiment of the system of the present invention;
Figure 5 is a partially plan schematic view which shows a fifth embodiment of the system of the present invention; and
Figures 6a - 6c are partially plan schematic views which show the access sequence of a supply vehicle to the space inside the nest.

### NUMERICAL REFERENCE OF THE FIGURES

(1) Space inside the nest;
(1a) Barrier of the nest;
(1b) Parts collection area;
(1c) Vehicle access area;
(2a) Emitting photocell (of the access request means);
(3a) Receiving photocell (of the access request means);
(2b) Optical reflection device (of the access request means);
(3b) Emitting/receiving photocell (of the access request means);
(2c) Vehicle chassis-portion of ferrous material (of the access request means);
(3c) Inductive sensors (of the access request means);
(3d) Photocells (of the access request means);
(3e) Programmable Logic Controller (PLC);
(4a) Safety laser scanner (of the occupation detection means);
(4b) Photoelectric barrier (of the occupation detection means);
(5a) Inductive sensors;
(5b) Metal profiles;
(6) Means for opening and closing the parts collection area;
(7a) Single beam receiver (of the connection means);
(7b) Single beam emitter (of the connection means)
(8) Doors;
(8a) Door safety sensor;
(9) Light beacon;
(10) Security scanner in the nest;
(15) Supply vehicle with an automated guided system (AGV);
(20) Assembly robot; and
(d) Predetermined distance at which the access request is made.

### DESCRIPTION OF A PREFERRED EMBODIMENT

Throughout the present description, as well as in the attached figures, the elements with the same or similar functions will be designated with the same numerical references.

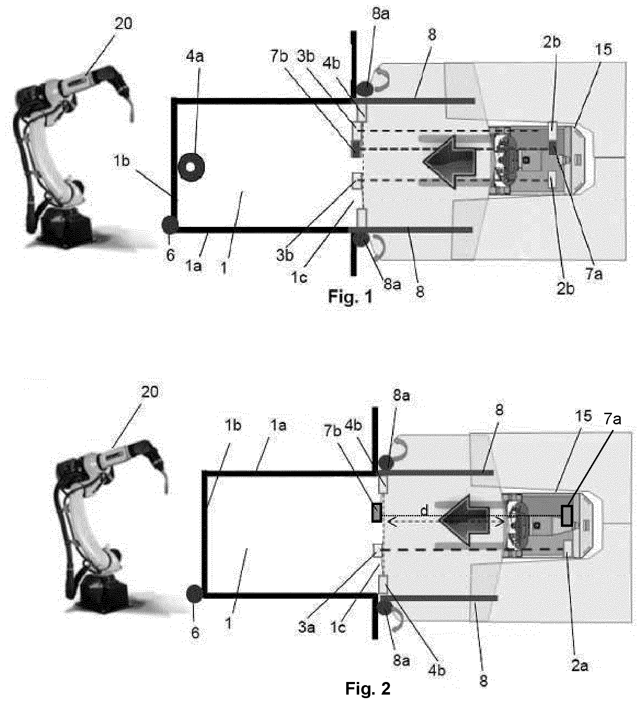

Figure 1 shows a first embodiment of the system of the present invention. In this figure, one can see a nest comprising an inside space (1) delimited by a barrier (1a), a parts collection area (1b) (which a robot (20) accesses) and a vehicle access area (1c) (where a vehicle (15) accesses in the direction shown by the arrow).

In the vehicle access area (1c) there are two doors (8), controlled by two respective door control safety sensors (8a). When the doors (8) open, they act as barriers, preventing access to the space inside the nest (1) from the sides.

In this particular embodiment of the invention, the access request means comprise two emitting/receiving photocells (3b) provided in the access area (1c) and two optical reflection devices (2b) provided in the vehicle (15). Furthermore, connection means comprise a single beam emitter (7b) and a single beam receiver (7a). Also provided are means for opening and closing (6) the parts collection area.

In this embodiment of the invention, in addition to comprising a photoelectric barrier (4b), the occupation detection means comprise a safety laser scanner (4a).

Figure 2 shows a second embodiment of the system of the present invention. In this particular case, the access request means comprise an emitting photocell (2a) provided in the vehicle (15). Furthermore, said emitting photocell (2a), when reaching the predetermined distance (d) to the vehicle access area (1c), emits a category 4 single beam access request which is received by the receiving photocell (3a). When receiving the access request signal, the occupation detection means (which, in this embodiment, comprise a photoelectric barrier (4b)), are activated.

The access control system herein shown further comprises connection means (7b) and (7a). Also provided are means for opening and closing (6) the parts collection area.

In practice, it is possible that, although the space inside the nest (1) is unoccupied (meaning no robot (20) or supply vehicle (15) has entered), in said inside space (1) there could be a container intended for storing, for example, assembly parts. To prepare for this situation, the present invention envisages the possibility that the occupation detection means (4a) can be calibrated in such a way that they understand the space inside the nest to be empty when they detect only the presence of said container.

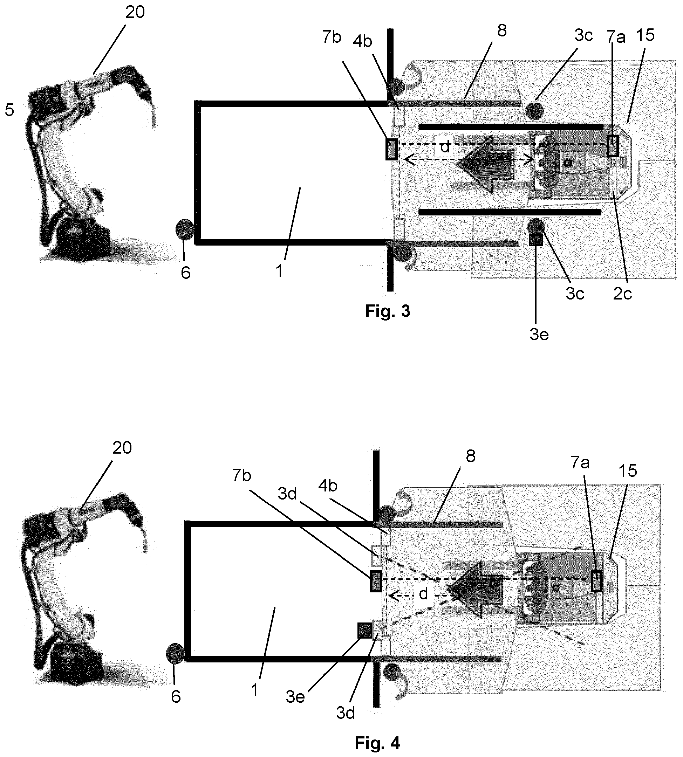

Figure 3 shows a third embodiment of the system of the present invention. In this particular case, the access request means comprise two inductive sensors (3c) situated at the predetermined distance (d). Furthermore, since the chassis (2c) of the vehicle (15) is made of ferrous material, when the vehicle (15) reaches said predetermined distance (d), the inductive sensors (3c) detect it, sending an access request signal to the PLC (3e).

Figure 4 shows a fourth embodiment of the system of the present invention. In this particular case, the access request means comprise two photocells (3d), the beams of which cross at a point situated at the predetermined distance (d). This way, when the vehicle (15) reaches said predetermined distance (d), the two beams of the photocells (3d) stop crossing, this being the nest access request signal, which is then managed by the PLC (3e).

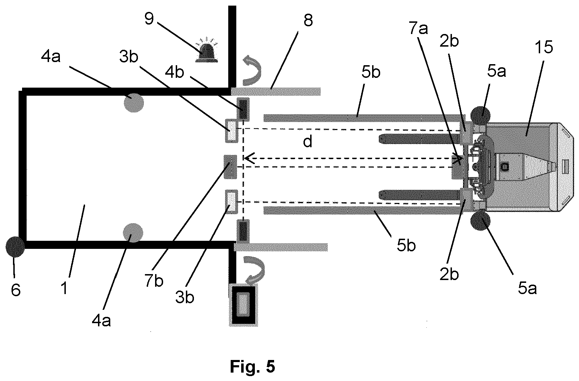

Figure 5 shows a fifth embodiment of the system of the present invention. In this particular case, in the vehicle access area (1c) there are two metal profiles (5b) arranged in such a way that the ends of the metal profiles (5b) furthest from the nest are at the same distance as the predetermined distance (d). Furthermore, a pair of inductive sensors (5a) are arranged in the automated guided vehicle (15). This way, when the vehicle (15) reaches said predetermined distance (d), the inductive sensors detect the metal profiles, inform the access request means, the access request means then sending the corresponding access request signal to the nest.

In this embodiment of figure 5 the access request means comprise two emitting/receiving photocells (3b) arranged in the vehicle access area (1c) and two optical reflection devices (2b) arranged in the automated guided vehicle (15), likewise, they are provided with connection means (7b) and (7a) and means for opening and closing (6) the parts collection area.

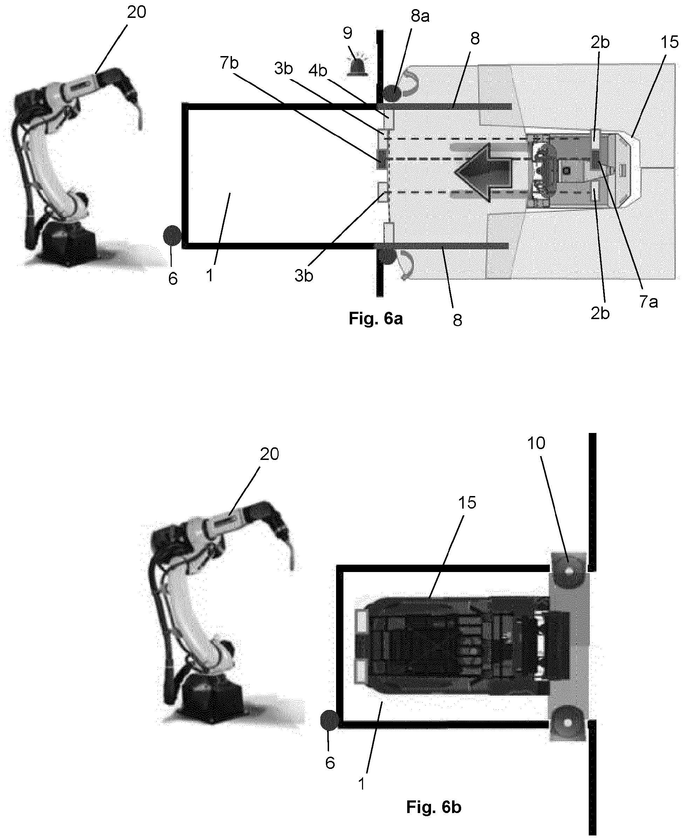

Figures 6a - 6c are views that schematically show the access sequence of a supply vehicle (15) to the space inside the nest (1).

Figure 6a shows the vehicle (15) access procedure to the space inside the nest (1). In the particular example herein shown, the access control system according to the invention is very similar to that shown in figure 1, the access request means having two emitting/receiving photocells (3b) and two optical reflection devices (2b).

In the example shown in figure 6A the vehicle (15) has reached the predetermined distance (d). This causes the beams emitted by the emitting/receiving photocells (3b) to reach the optical reflection means (2b) provided in the vehicle (15). As a result, the beams are reflected, returning the emitting/receiving photocells (3b) (as schematically illustrated by the corresponding dashed line). When the emitting/receiving photocells (3b) receive the previously emitted beams again, the system interprets that an access request has been received and the occupation detection means are activated, which comprise, in this specific example, a photoelectric barrier (4b).

If the photoelectric barrier (4b) were previously crossed by a vehicle (15) or if the door (8) were moved, when the vehicle (15) is situated at the distance (d), activating the safety sensors (8a), the light beacon (9) is then activated, and until the barrier (4b) and the door (8) are reset by an operator, the vehicle (15) will not have access.

If the photoelectric barrier (4b) has not been crossed, or if the door (8) has not been moved, or if the system has been reset, the area inside (1) the nest is secure and a signal is sent to the connection means (7a) and (7b).

The connection means connect the vehicle (15) to safety means of the production line, configured to send signals of an incident when an incident is detected on the production line.

Once an inoccupation signal is received from the occupation detection means, the connection means emitter (7b) sends a category 4 single beam to the connection means receiver (7a), thus connecting the safety means of the production line to the vehicle (15).

If there is no incident on the production line, the vehicle (15) can then access the inside of the nest (1) and, in turn, if there were an incident, the vehicle (15) would be immobile until the same were solved.

Said access movement is schematically shown by the arrow in figure 6a.

Figure 6b is an optional step, in which the vehicle (15) has already accessed the space inside the nest (1). In the embodiment herein shown, a scanner (10) is provided, intended to secure the rear part of the vehicle (15) when it is inside (1) the nest.

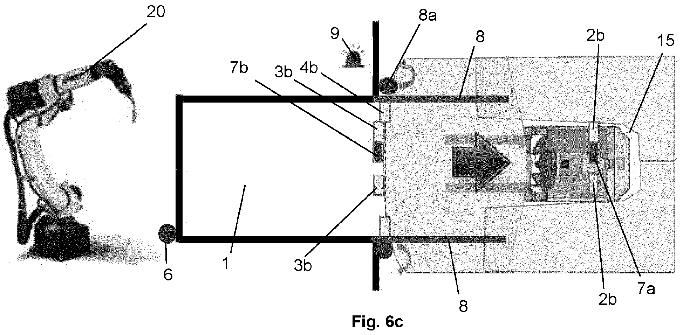

In the example shown in figure 6C the vehicle (15) has already completed the tasks of stocking the parts and is proceeding to leave the inside (1) of the nest.

By going beyond the predetermined distance, the connection means cease to complement the safety of the vehicle (15), disconnecting the vehicle (15) from the safety means of the production line by interrupting the category 4 beam between the connection means (7a) and (7b), the vehicle (15) taking back its own safety system.

The present invention is not limited in any way by the embodiments herein disclosed. For a person skilled in the art, other possible embodiments that differ from those of the present invention will be evident in light of the present description. Thus, the scope of protection of the present invention is exclusively defined by the following claims.

## Claims

1. A system for controlling access to at least one nest of a production line, said nest comprising an inside space (1) delimited by a barrier (1a), a parts collection area (1b) and a vehicle access area (1c), the production line comprising safety means configured to send signals of an incident when an incident is detected on the production line, the system comprising:
- access request means (2a - 3a; 2b - 3b; 2c - 3c; 3d; 3e), configured to send an access request signal to the nest when an automated guided vehicle (15) intending to stock the nest with assembly parts reaches a predetermined distance (d) from the vehicle access area (1c), said automated guided vehicle (15) being provided with an autonomous safety system configured to prevent the vehicle from moving when it detects the proximity of an obstacle;
and being **characterized in that** it comprises:
- occupation detection means (4a, 4b), configured to detect whether the space inside the nest (1) is occupied, and to emit an inoccupation signal in the case that the space inside the nest (1) is not occupied, and to emit an occupation signal in the case that the space inside the nest (1) is occupied;
- connection means (7a, 7b) configured so that once an inoccupation signal is received from the occupation detection means (4a, 4b), the automated guided vehicle (15) be connected to the safety means of the production line and configured to stop the automated guided vehicle in case of receiving a signal of an incident from the safety means of the production line; and
- means for opening and closing (6) the parts collection area, connected to the connection means (7a, 7b) and configured to close the parts collection area (1b) before the vehicle (15) enters the space inside the nest (1) and to open the parts collection area when the vehicle (15) has completed its access into the space inside the nest.

2. The access control system according to claim 1, which further comprises at least one methacrylate door (8) arranged in the vehicle access area and provided with at least one safety sensor (8a), the safety sensor (8a) being configured to activate a safety alarm if the door (8) is folded and to deny any access request until the safety alarm is reset and the occupation detection means (4a, 4b) confirm that the space inside the nest (1) is not occupied.

3. The access control system according to claim 1, wherein the access request means comprise a receiving photocell (3a) arranged in the vehicle access area (1c) and an emitting photocell (2a) arranged in the automated guided vehicle (15).

4. The access control system according to claim 1, wherein the access request means comprise a receiving photocell (3a) arranged in the automated guided vehicle (15) and an emitting photocell (2a) arranged in the vehicle access area (1c).

5. The access control system according to claim 1, wherein the access request means comprise an emitting/receiving photocell (3b) arranged in the vehicle access area (1c) and an optical reflection device (2b) arranged in the automated guided vehicle (15).

6. The access control system according to claim 1, wherein the access request means comprise at least one inductive sensor (3c) connected to a programmable logic controller and a portion (2c) of ferrous material.

7. The access control system according to claim 1, wherein the access request means comprise two photocells (3d), the beams of which cross at one point, situated at the predetermined distance (d) to the vehicle access area (1c).

8. The access control system according to any of the preceding claims, wherein the occupation detection means are provided with a safety laser scanner (4a) housed in the space inside the nest.

9. The access control system according to any of the preceding claims, wherein the occupation detection means are provided with a photoelectric barrier (4b) arranged in the vehicle access area (1c).

10. The access control system according to claim 1, which further comprises:
- two metal profiles (5b) arranged in the vehicle access area (1c) to the nest, the ends of the metal profiles (5b) being arranged furthest from the nest at the same distance as the predetermined distance (d); and
- a pair of inductive sensors (5a) arranged in the automated guided vehicle (15), the inductive sensors (5a) being configured to detect the metal profiles (5b) and to inform the access request means (2a - 3a; 2b - 3b; 2c - 3c; 3d; 3e) when said metal profiles (5b) are detected.

11. The access control system according to any of the preceding claims, wherein the connection means comprise a single beam emitter (7b) and a single beam receiver (7a).

12. A method for controlling access to at least one nest of a production line, said nest comprising an inside space (1) delimited by a barrier (1a), a parts collection area (1b) and a vehicle access area (1c), the production line comprising safety means configured to send signals of an incident when an incident is detected on the production line, the method comprising:
- sending an access request signal to the nest via the access request means (2a - 3a; 2b - 3b; 2c - 3c; 3d; 3e) when the vehicle (15) reaches a predetermined distance to the vehicle access area (1c);
- verifying the occupation detection means (4a, 4b), in response to the access request signal to the nest and emitting with said means (4a, 4b) an inoccupation signal in the case that the space inside the nest (1) is not occupied and emitting an occupation signal in the case that the space inside the nest (1) is occupied;
and the method being **characterized in that** it comprises:
- after receiving an inoccupation signal emitted by the occupation detection means (4a, 4b), connecting by means of the connection means (7a, 7b) the automated guided vehicle (15) to the safety means of the production line, and temporarily complementing the autonomous vehicle safety system via the connection means (7a, 7b), transmitting to it any incident that occurs on the production line;
- stopping, by means of the connection means (7a, 7b), the automated guided vehicle (15) in the case of receiving a signal of an incident from the safety means of the production line and, in the opposite case, allowing the automated guided vehicle (15) access to the space inside the nest (1); and
- closing the parts collection area (1b), with the opening and closing means (6), before the connection means (7a, 7b) allow the vehicle (15) to access the space inside the nest (1) and opening the parts collection area (1b) when the vehicle (15) has completed its access to the space inside the nest (1).

## Patentansprüche

1. System zum Steuern des Zugangs zu wenigstens einer Gruppe einer Produktionslinie, wobei die Gruppe einen von einer Schranke (1a) abgegrenzten Innenraum (1), einen Teilesammelbereich (1b) und einen Fahrzeugzugangsbereich (1c) umfasst, wobei die Produktionslinie zum Senden von Signalen eines Zwischenfalls, wenn ein Zwischenfall an der Produktionslinie erfasst wird, ausgebildete Sicherheitsmittel umfasst, wobei das System umfasst:
- Zugangsanforderungsmittel (2a - 3a; 2b - 3b; 2c - 3c; 3d; 3e), ausgebildet zum Senden eines Zugangsanforderungssignals, wenn ein fahrerloses Transportfahrzeug (15), welches das Bestücken der Gruppe mit Montageteilen beabsichtigt, einen vorbestimmten Abstand (d) zum Fahrzeugzugangsbereich (1c) erreicht, wobei das fahrerlose Transportfahrzeug (15) mit einem autonomen Sicherheitssystem, ausgebildet zum Verhindern des Bewegens des Fahrzeugs, wenn es die Nähe eines Hindernisses erfasst, ausgestattet ist;
**dadurch gekennzeichnet ist, dass** es umfasst:
- Belegungserfassungsmittel (4a, 4b), ausgebildet zum Erfassen, ob der Raum innerhalb der Gruppe (1) belegt ist, und zum Senden eines Nichtbelegungssignals, wenn der Raum innerhalb der Gruppe (1) nicht belegt ist, und zum Senden eines Belegungssignals, wenn der Raum innerhalb der Gruppe (1) belegt ist;
- Verbindungsmittel (7a, 7b), so ausgebildet, dass, wenn ein Nichtbelegungssignal von den Belegungserfassungsmitteln (4a, 4b) empfangen wird, das fahrerlose Transportfahrzeug (15) mit den Sicherheitsmitteln der Produktionslinie verbunden wird, und ausgebildet zum Stoppen des fahrerlosen Transportfahrzeugs beim Empfangen eines Signals eines Zwischenfalls von den Sicherheitsmitteln der Produktionslinie; und
- Mittel zum Öffnen und Schließen (6) des Teilesammelbereichs, verbunden mit den Verbindungsmitteln (7a, 7b) und ausgebildet zum Schließen des Teilesammelbereichs (1b), bevor das Fahrzeug (15) in den Raum innerhalb der Gruppe (1) gelangt, und zum Öffnen des Teilesammelbereichs, wenn das Fahrzeug (15) seinen Zugang zum Raum innerhalb der Gruppe abgeschlossen hat.

2. Zugangssteuersystem nach Anspruch 1, das ferner wenigstens eine im Fahrzeugzugangsbereich angeordnete und mit wenigstens einem Sicherheitssensor (8a) ausgestattete Methacrylat-Tür (8) umfasst, wobei der Sicherheitssensor (8a) zum Aktivieren eines Sicherheitsalarms, wenn die Tür (8) gefaltet ist, und zum Abweisen einer Zugangsanforderung, bis der Sicherheitsalarm zurückgesetzt und die Belegungserfassungsmittel (4a, 4b) bestätigen, dass der Raum innerhalb der Gruppe (1) nicht belegt ist, ausgebildet ist.

3. Zugangssteuersystem nach Anspruch 1, wobei die Zugangsanforderungsmittel eine im Fahrzeugzugangsbereich (1c) angeordnete Empfangsfotozelle (3a) und eine im fahrerlosen Transportfahrzeug (15) angeordnete Sendefotozelle (2a) umfassen.

4. Zugangssteuersystem nach Anspruch 1, wobei die Zugangsanforderungsmittel eine im fahrerlosen Transportfahrzeug (15) angeordnete Empfangsfotozelle (3a) und eine im Fahrzeugzugangsbereich (1c) angeordnete Sendefotozelle (2a) umfassen.

5. Zugangssteuersystem nach Anspruch 1, wobei die Zugangsanforderungsmittel eine im Fahrzeugzugangsbereich (1c) angeordnete Sende-/Empfangsfotozelle (3b) und eine im fahrerlosen Transportfahrzeug (15) angeordnete optische Reflexionsvorrichtung (2b) umfassen.

6. Zugangssteuersystem nach Anspruch 1, wobei die Zugangsanforderungsmittel wenigstens einen mit einem programmierbaren logischen Regler und einem Abschnitt (2c) aus Eisenmaterial verbundenen Induktivsensor (3c) umfassen.

7. Zugangssteuersystem nach Anspruch 1, wobei die Zugangsanforderungsmittel zwei Fotozellen (3d) umfassen, deren Strahlen sich an einem Punkt, angeordnet im vorbestimmten Abstand (d) zum Fahrzeugzugangsbereich (1c), kreuzen.

8. Zugangssteuersystem nach einem der vorhergehenden Ansprüche, wobei die Belegungserfassungsmittel mit einem im Raum innerhalb der Gruppe angeordneten Sicherheitslaserscanner (4a) ausgestattet sind.

9. Zugangssteuersystem nach einem der vorhergehenden Ansprüche, wobei die Belegungserfassungsmittel mit einer im Fahrzeugzugangsbereich (1c) angeordneten Lichtschranke (4b) ausgestattet sind.

10. Zugangssteuersystem nach Anspruch 1, das ferner umfasst:
- zwei im Fahrzeugzugangsbereich (1c) für die Gruppe angeordnete Metallprofile, wobei die Enden der Metallprofile (5b) mit der größten Entfernung zur Gruppe im gleichen Abstand wie der vorbestimmte Abstand (d) angeordnet sind; und
- ein Paar von im fahrerlosen Transportfahrzeug (15) angeordneten Induktivsensoren (5a), wobei die Induktivsensoren (5a) zum Erfassen der Metallprofile (5b) und zum Informieren der Zugangsanforderungsmittel (2a - 3a; 2b - 3b; 2c - 3c; 3d; 3e), wenn die Metallprofile (5b) erfasst werden, ausgebildet sind.

11. Zugangssteuersystem nach einem der vorhergehenden Ansprüche, wobei die Verbindungsmittel einen Einzelstrahlsender (7b) und einen Einzelstrahlempfänger (7a) umfassen.

12. Verfahren zum Steuern des Zugangs zu wenigstens einer Gruppe einer Produktionslinie, wobei die Gruppe einen von einer Schranke (1a) abgegrenzten Innenraum (1), einen Teilesammelbereich (1b) und einen Fahrzeugzugangsbereich (1c) umfasst, wobei die Produktionslinie zum Senden von Signalen eines Zwischenfalls, wenn ein Zwischenfall an der Produktionslinie erfasst wird, ausgebildete Sicherheitsmittel umfasst, wobei das Verfahren umfasst:
- Senden eines Zugangsanforderungssignals an die Gruppe über die Zugangsanforderungsmittel (2a - 3a; 2b - 3b; 2c- 3c; 3d; 3e), wenn das Fahrzeug (15) einen vorbestimmten Abstand zum Fahrzeugzugangsbereich (1c) erreicht;
- Überprüfen der Belegungserfassungsmittel (4a, 4b) als Reaktion auf das Zugangsanforderungssignal an die Gruppe und Senden eines Nichtbelegungssignals mit den Mitteln (4a, 4b), wenn der Raum innerhalb der Gruppe (1) nicht belegt ist, und Senden eines Belegungssignals, wenn der Raum innerhalb der Gruppe (1) belegt ist;
wobei das Verfahren **dadurch gekennzeichnet ist, dass** es umfasst:
- nach dem Empfangen eines von den Belegungserfassungsmitteln (4a, 4b) gesendeten Nichtbelegungssignals Verbinden des fahrerlosen Transportfahrzeugs (15) mit den Sicherheitsmitteln der Produktionslinie durch die Verbindungsmittel (7a, 7b) und vorübergehendes Ergänzen des autonomen Fahrzeugsicherheitssystems über die Verbindungsmittel (7a, 7b), wobei an dieses jeder Zwischenfall gesendet wird, der in der Produktionslinie auftritt;
- Stoppen des fahrerlosen Transportfahrzeugs (15) durch die Verbindungsmittel (7a, 7b) bei Empfangen eines Signals eines Zwischenfalls von den Sicherheitsmitteln der Produktionslinie und im gegenteiligen Fall Ermöglichen des Zugangs zum Raum innerhalb der Gruppe (1) für das fahrerlose Transportfahrzeug (15); und
- Schließen des Teilesammelbereichs (1b) mit den Öffnungs- und Schließmitteln (6), bevor die Verbindungsmittel (7a, 7b) dem Fahrzeug (15) den Zugang zum Raum innerhalb der Gruppe (1) ermöglichen, und Öffnen des Teilesammelbereichs (1b), wenn das Fahrzeug (15) seinen Zugang zum Raum innerhalb der Gruppe (1) abgeschlossen hat.

## Revendications

1. Système de contrôle d'accès à au moins un poste d'assemblage d'une ligne de production, ledit poste d'assemblage comprenant un espace intérieur (1) délimité par une barrière (1a), une zone de collecte de pièces (1b) et une zone d'accès de véhicule (1c), la ligne de production comprenant des moyens de sécurité configurés pour envoyer des signaux d'un incident lorsqu'un incident est détecté sur la ligne de production, le système comprenant :
- des moyens de demande d'accès (2a - 3a ; 2b - 3b ; 2c - 3c ; 3d ; 3e), configurés pour envoyer un signal de demande d'accès au poste d'assemblage lorsqu'un véhicule à guidage automatique (15) destiné à approvisionner le poste d'assemblage en pièces d'assemblage atteint une distance (d) prédéterminée de la zone d'accès de véhicule (1c), ledit véhicule à guidage automatique (15) étant pourvu d'un système de sécurité autonome configuré pour empêcher le véhicule de se déplacer lorsqu'il détecte la proximité d'un obstacle ;
et étant **caractérisé en ce qu'**il comprend :
- des moyens de détection d'occupation (4a, 4b), configurés pour détecter si l'espace à l'intérieur du poste d'assemblage (1) est occupé, et pour émettre un signal d'inoccupation dans le cas où l'espace à l'intérieur du poste d'assemblage (1) n'est pas occupé, et pour émettre un signal d'occupation dans le cas où l'espace à l'intérieur du poste d'assemblage (1) est occupé ;
- des moyens de connexion (7a, 7b) configurés de sorte qu'une fois qu'un signal d'inoccupation est reçu des moyens de détection d'occupation (4a, 4b), le véhicule à guidage automatique (15) est connecté aux moyens de sécurité de la ligne de production et configuré pour arrêter le véhicule à guidage automatique en cas de réception d'un signal d'un incident des moyens de sécurité de la ligne de production ; et
- des moyens d'ouverture et de fermeture (6) de la zone de collecte de pièces, connectés aux moyens de connexion (7a, 7b) et configurés pour fermer la zone de collecte de pièces (1b) avant que le véhicule (15) ne pénètre dans l'espace à l'intérieur du poste d'assemblage (1) et pour ouvrir la zone de collecte de pièces lorsque le véhicule (15) a fini d'accéder à l'espace à l'intérieur du poste d'assemblage.

2. Système de contrôle d'accès selon la revendication 1, comprenant en outre au moins une porte (8) en méthacrylate agencée dans la zone d'accès de véhicule et pourvue d'au moins un capteur de sécurité (8a), le capteur de sécurité (8a) étant configuré pour activer une alarme de sécurité si la porte (8) est rabattue et pour refuser toute demande d'accès jusqu'à ce que l'alarme de sécurité soit réinitialisée et que les moyens de détection d'occupation (4a, 4b) confirment que l'espace à l'intérieur du poste d'assemblage (1) n'est pas occupé.

3. Système de contrôle d'accès selon la revendication 1, dans lequel les moyens de demande d'accès comprennent une cellule photoélectrique réceptrice (3a) agencée dans la zone d'accès de véhicule (1c) et une cellule photoélectrique émettrice (2a) agencée dans le véhicule à guidage automatique (15).

4. Système de contrôle d'accès selon la revendication 1, dans lequel les moyens de demande d'accès comprennent une cellule photoélectrique réceptrice (3a) agencée dans le véhicule à guidage automatique (15) et une cellule photoélectrique émettrice (2a) agencée dans la zone d'accès de véhicule (1c).

5. Système de contrôle d'accès selon la revendication 1, dans lequel les moyens de demande d'accès comprennent une cellule photoélectrique émettrice/réceptrice (3b) agencée dans la zone d'accès de véhicule (1c) et un dispositif de réflexion optique (2b) agencé dans le véhicule à guidage automatique (15).

6. Système de contrôle d'accès selon la revendication 1, dans lequel les moyens de demande d'accès comprennent au moins un capteur inductif (3c) connecté à un contrôleur logique programmable et une partie (2c) de matériau ferreux.

7. Système de contrôle d'accès selon la revendication 1, dans lequel les moyens de demande d'accès comprennent deux cellules photoélectriques (3d) dont les faisceaux se croisent en un point situé à la distance (d) prédéterminée par rapport à la zone d'accès de véhicule (1c).

8. Système de contrôle d'accès selon l'une des revendications précédentes, dans lequel les moyens de détection d'occupation sont pourvus d'un lecteur laser de sécurité (4a) logé dans l'espace à l'intérieur du poste d'assemblage.

9. Système de contrôle d'accès selon l'une des revendications précédentes, dans lequel les moyens de détection d'occupation sont pourvus d'une barrière photoélectrique (4b) agencée dans la zone d'accès de véhicule (1c).

10. Système de contrôle d'accès selon la revendication 1, qui comprend en outre :
- deux profilés métalliques (5b) agencés dans la zone d'accès de véhicule (1c) dans le poste d'assemblage, les extrémités des profilés métalliques (5b) étant agencés le plus loin du poste d'assemblage à la même distance que la distance (d) prédéterminée ; et
- une paire de capteurs inductifs (5a) agencés dans le véhicule à guidage automatique (15), les capteurs inductifs (5a) étant configurés pour détecter les profilés métalliques (5b) et pour informer les moyens de demande d'accès (2a - 3a ; 2b - 3b ; 2c - 3c ; 3d ; 3e) lorsque lesdits profilés métalliques (5b) sont détectés.

11. Système de contrôle d'accès selon l'une des revendications précédentes, dans lequel les moyens de connexion comprennent un émetteur à faisceau unique (7b) et un récepteur à faisceau unique (7a).

12. Procédé de contrôle d'accès à au moins un poste d'assemblage d'une ligne de production, ledit poste d'assemblage comprenant un espace intérieur (1) délimité par une barrière (1a), une zone de collecte de pièces (1b) et une zone d'accès de véhicule (1c), la ligne de production comprenant des moyens de sécurité configurés pour envoyer des signaux d'un incident lorsqu'un incident est détecté sur la ligne de production, le procédé comprenant les étapes suivantes :
- envoyer un signal de demande d'accès au poste d'assemblage via les moyens de demande d'accès (2a - 3a ; 2b - 3b ; 2c - 3c ; 3d ; 3e) lorsque le véhicule (15) atteint une distance prédéterminée par rapport à la zone d'accès de véhicule (1c) ;
- vérifier les moyens de détection d'occupation (4a, 4b), en réponse au signal de demande d'accès au poste d'assemblage, et émettre, à l'aide desdits moyens (4a, 4b), un signal d'inoccupation dans le cas où l'espace à l'intérieur du poste d'assemblage (1) n'est pas occupé, et émettre un signal d'occupation dans le cas où l'espace à l'intérieur du poste d'assemblage (1) est occupé ;
et le procédé étant **caractérisé en ce qu'**il comprend les étapes suivantes :
- après réception d'un signal d'inoccupation émis par les moyens de détection d'occupation (4a, 4b), connecter, par les moyens de connexion (7a, 7b), le véhicule à guidage automatique (15) aux moyens de sécurité de la ligne de production, et compléter temporairement le système de sécurité de véhicule autonome via les moyens de connexion (7a, 7b), en lui transmettant tout incident qui se produit sur la ligne de production ;
- arrêter le véhicule à guidage automatique (15) par les moyens de connexion (7a, 7b), en cas de réception d'un signal d'incident des moyens de sécurité de la ligne de production, et dans le cas contraire, permettre au véhicule à guidage automatique (15) d'accéder à l'espace à l'intérieur du poste d'assemblage (1) ; et
- fermer la zone de collecte de pièces (1b) à l'aide des moyens d'ouverture et de fermeture (6) avant que les moyens de connexion (7a, 7b) ne permettent au véhicule (15) d'accéder à l'espace à l'intérieur du poste d'assemblage (1), et ouvrir la zone de collecte de pièces (1b) lorsque le véhicule (15) a fini d'accéder à l'espace à l'intérieur du poste d'assemblage (1).
